# EUROPEAN PATENT APPLICATION

(11) **EP 4 084 149 A1**
(43) Date of publication of application: **02.11.2022**
(21) Application number: 21898656.0
(22) Date of filing: 26.11.2021
(51) Int. Cl.: H01M 4/62, H01M 4/13, H01M 4/02

(54) **BINDER FOR ANODE OF SECONDARY BATTERY, ANODE OF SECONDARY BATTERY, AND SECONDARY BATTERY**

(30) Priority: 27.11.2020 KR 20200163138; 25.11.2021 KR 20210164756
(71) Applicant: Lg Chem, Ltd., Seoul 07336 (KR)
(72) Inventor: KANG, Min Ah, Daejeon 34122 (KR); SON, Jeong Man, Daejeon 34122 (KR); LEE, Sungjin, Daejeon 34122 (KR); RYU, Dong Jo, Daejeon 34122 (KR); WOO, Jungeun, Daejeon 34122 (KR)
(74) Representative: Goddar, Heinz J.
(86) International application number: PCT/KR2021/017579
(87) International publication number: WO 2022/114831

(57) **Abstract**

The present disclosure relates to a binder for an anode of a secondary battery, an anode of a secondary battery and a secondary battery. Specifically, there is provided a binder for an anode, which has elasticity enough to withstand a change in the volume of an anode active material while improving processability, and which can ultimately secure the lifespan of a secondary battery.

## Description

### [TECHNICAL FIELD]

### Cross-reference to Related Application(s)

This application claims the benefits of Korean Patent Applications No. 10-2020-0163138 filed on November 27, 2020 and No. 10-2021-0164756 filed on November 25, 2021 with the Korean Intellectual Property Office, the disclosure of which is incorporated herein by reference in its entirety.

The present disclosure relates to a binder for an anode of a secondary battery, an anode of a secondary battery and a secondary battery.

### [BACKGROUND OF ART]

A secondary battery has been in the spotlight as a power source for not only small electronic devices such as portable computers, portable telephones, cameras, etc., but also large electronic devices such as electric vehicles, power storage devices, etc.

The anode of the secondary battery includes a current collector and an anode active material layer, in which the anode active material layer includes an anode active material.

Specifically, various types of carbon-based materials including artificial graphite, natural graphite, and hard carbon capable of insertion/desorption of lithium have been applied as the anode active material, and research is also underway to use silicon, tin, silicon-tin alloy, etc. as an anode active material for increasing discharge capacity.

However, as the discharge capacity of the anode active material increases, a change in volume caused by charging and discharging becomes severe, thereby causing a problem of weakening the adhesion of the anode and reducing the lifespan of the secondary battery.

In this regard, there is a need for a binder having elasticity enough to withstand a change in the volume of the anode active material. In particular, in order to secure the lifespan of the secondary battery, it is necessary to apply a binder having appropriate elasticity in an actually used temperature range of the battery to the anode. In addition, a binder with high elasticity is also required to ensure processability at the time of manufacturing the anode.

### [DETAILED DESCRIPTION OF THE INVENTION]

### [Technical Problem]

In the present disclosure, there is provided a binder for an anode, which has elasticity enough to withstand a change in the volume of an anode active material while improving processability, and which can ultimately secure the lifespan of a secondary battery.

### [Technical Solution]

Specifically, in the embodiments of the present disclosure, there are provided a binder for an anode of a secondary battery having an excellent elastic modulus in an actually used temperature range, an anode mixture including the same, an anode, and a secondary battery.

Specifically, in one embodiment of the present disclosure, there is provided a binder for an anode of a secondary battery including a (co)polymer having a storage modulus of 100 MPa or more measured at 100 °C.

In another embodiment of the present disclosure, there is provided a method for preparing the above binder for the anode, which includes the step of preparing the (co)polymer by emulsion-polymerizing a monomer mixture in the presence of an emulsifier and a polymerization initiator.

In another embodiment of the present disclosure, there is provided an anode mixture of a secondary battery including the above binder for the anode of the secondary battery and an anode active material.

In another embodiment of the present disclosure, there is provided an anode of a secondary battery including an anode mixture layer including the anode mixture; and an anode current collector.

In another embodiment of the present disclosure, there is provided a secondary battery including the above anode.

### [ADVANTAGEOUS EFFECTS]

A binder for an anode of a secondary battery according to one embodiment has elasticity enough to withstand a change in the volume of an anode active material while improving processability, and in particular, has appropriate elasticity in an actually used temperature range of the battery, thereby ultimately securing the lifespan of the secondary battery.

### [DETAILED DESCRIPTION OF THE EMBODIMENTS]

In the present disclosure, the terms "the first", "the second", and the like are used to describe a variety of components, and these terms are merely employed to distinguish a certain component from other components.

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this disclosure, specify the presence of stated features, numbers, steps, components, or combinations thereof, but do not preclude the presence or addition of one or more other features, numbers, steps, components, or combinations thereof.

Also, as used herein, when a layer or an element is mentioned to be formed "on" or "above" layers or elements, the layer or element may be directly formed on the layers or elements, or other layers or elements may be additionally formed between the layers, on a subject, or on a substrate.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

### Binder for anode of secondary battery

In one embodiment of the present disclosure, provided is a binder for an anode of a secondary battery including a (co)polymer having a storage modulus of 100 MPa or more as measured at 100 °C.

### Properties of binder for anode

Dynamic mechanical analysis is used to figure out the viscous and elastic properties by measuring a recovery force or strain when an external change is applied, and a measured elastic modulus is a complex number consisting of storage modulus and loss modulus. The higher the storage modulus, the closer to a perfect elastic body. The mechanical properties of polymer may vary depending on the degree of movement of polymer chains. As a temperature increases, the movement of polymer chains may increase and thus the mechanical properties may decrease. In particular, a degree of decrease in mechanical properties becomes very large below and above the glass transition temperature of the polymer.

Here, the storage modulus represents an elastic component in which strain energy is accumulated in the material as a stress.

In addition, in general, the storage modulus decreases as a temperature increases. If the anode binder according to one embodiment includes a (co)polymer, the storage modulus may not significantly decrease even when the temperature increases.

In order to confirm if the binder for the anode according to the embodiment has appropriate elasticity in an actually used temperature range of the battery, the storage modulus of the (co)polymer may be measured at 100 °C.

Specifically, with respect to the binder for the anode according to the embodiment, a viscoelastic behavior may be measured for the dynamic deformation of a film, thereby obtaining the storage modulus of the (co)polymer at 100 °C.

According to one embodiment, the storage modulus may be measured by applying a shear strain with a frequency of 1 Hz and a strain amplitude of 0.1% to a film having a thickness of 2 mm or less including the (co)polymer within a temperature range of -60 to 100 °C and raising the temperature at a heating rate of 5 °C/min.

More specifically, the film-shaped specimen may be prepared by drying the binder for the anode according to the embodiment to form a film having a thickness of 2 mm or less, and then punching the film in a rectangular shape with 18 mm (length) * 6 mm (width).

In addition, the film-shaped specimen may be added to a dynamic mechanical analyzer (manufactured by TA Instrument), and the temperature may rise at a frequency of 1 Hz and 5 °C/min in a film tension mode, thereby measuring a viscoelastic behavior against dynamic deformation with a shear strain having a strain amplitude of 0.1% at each measurement temperature (-60 °C to 100 °C).

For the binder for the anode according to the embodiment, the viscoelastic behavior is measured with respect to the dynamic deformation of the film by the above method, so as to obtain the storage modulus measured at 100 °C, which may be 100 MPa or more, 102 MPa or more, 105 MPa or more, or 108 MPa or more. The upper limit is not particularly limited, but may be 500 MPa or less, 400 MPa or less, 350 MPa or less, or 300 MPa or less.

If the storage modulus of the (co)polymer measured at 100 °C is at a level of 100 MPa or more, the binder can withstand various changes in volume of the anode active material at the time of preparing the anode for the secondary battery, so as to improve processability, thereby giving optimal elasticity in an actually used temperature range, and securing the lifespan of the secondary battery. In addition, there is an effect of suppressing the thickness expansion of the electrode.

In addition, in order to confirm if the binder for the anode according to the embodiment has appropriate viscoelasticity in an actually used temperature range of the battery, the viscoelastic behavior against the dynamic deformation of the film may be measured to obtain a maximum peak temperature (Tp) of viscoelastic loss factor (tanδ).

Specifically, the viscoelastic behavior against dynamic deformation of the film may be measured by the same method as the storage modulus measurement.

With respect to the binder for the anode binder according to the embodiment, the viscoelastic behavior against the dynamic deformation of the film is measured by the above method to obtain a maximum peak temperature (Tp) of the viscoelastic loss factor (tanδ), which may be 0 °C or lower, -3 °C or lower, -6 °C or lower, or -9 °C or lower. The lower limit is not particularly limited, but may be -60 °C or higher, -50 °C or higher, -40 °C or lower, or -30 °C or higher.

Thus, according to one embodiment, the glass transition temperature of the (co)polymer may be -60 °C to 0 °C.

In addition, according to one embodiment, a ratio of the storage modulus measured at 100 °C to the storage modulus at the glass transition temperature of the (co)polymer may be 10% more. More specifically, the ratio of the storage modulus may be 12% or more, or 15% or more.

The binder for the anode according to the embodiment may satisfy the storage modulus and thus have elasticity enough to withstand a change in the volume of the anode active material while improving processability, and in particular, may have appropriate elasticity in an actually used temperature range of the battery, thereby ultimately securing the lifespan of the secondary battery.

### Type and content of repeating units

The binder for the anode may include a (co)polymer in which the type and content of repeating units are each controlled to a specific range.

In the present disclosure, the (co)polymer may mean a polymer or a (co)polymer.

Specifically, the copolymer may include a) 35 to 60 wt% of a first repeating unit derived from an aliphatic conjugated diene-based first monomer, b) 0.1 to 25 wt% of a second repeating unit derived from an aromatic vinyl-based second monomer, c) 10 to 35 wt% of a third repeating unit derived from a nitrile-based third monomer, and d) 15 to 35 wt% of a fourth repeating unit derived from an unsaturated carboxylic acid-based fourth monomer based on a total weight (100 wt%) of the repeating units.

The glass transition temperature of the (co)polymer may be -60 to 0 °C.

In particular, the third repeating unit may be a monomer including both an ethylenically unsaturated group and a nitrile group in a molecule, and may increase hardness, strength, and elastic modulus, thereby contributing to improvement of the lifespan of the electrode.

However, the effect of the third repeating unit may be expressed only when the content of the third repeating unit is 10 to 35 wt% based on the total weight (100 wt%) of the repeating units. When the content of the third repeating unit is less than 10 wt%, the effect is insignificant, and when exceeding 35 wt%, the strength of the binder per se may be lowered, thereby causing a problem of decreasing the adhesive force and reducing the lifespan.

Meanwhile, the first repeating unit may function to improve adhesive force between an anode active material and a current collector, and the second repeating unit and the fourth repeating unit may function to increase the strength of the binder.

In this regard, even though the content of the third repeating unit satisfies 10 to 35 wt%, anode adhesion may be reduced or capacity retention may be reduced when any one of the first to third repeating units is replaced with another material, or the limited content range of the embodiment is not satisfied (including cases where it is not included).

Accordingly, when each content range satisfies the limited range of the embodiment while including all of the first to fourth repeating units, the functions of the repeating units may be harmonized to provide elasticity enough to withstand a change in the volume of an anode active material while improving processability.

In particular, the binder for the anode of the embodiment may have appropriate elasticity in an actually used temperature range of the battery, and even when applied with a silicon-based anode active material exhibiting a sever volume expansion as well as a carbon-based anode active material, the lifespan of the secondary battery may be secured.

Hereinafter, each repeating unit will be described in more detail.

### First repeating unit

The first repeating unit may be derived from an aliphatic conjugated diene-based first monomer. Specifically, the first repeating unit corresponds to a structural unit of a (co)polymer formed by adding an aliphatic conjugated diene-based first monomer during polymerization.

When the first repeating unit is included in the (co)polymer, the binder for the anode of the embodiment may have an electrolyte swelling phenomenon suppressed at a high temperature, and may have elasticity due to a rubber component, thereby reducing the thickness of the anode, reducing a gas generation phenomenon, and also serving to improve the adhesive force, so that the binding force between the anode active material and the current collector may be maintained.

As the first monomer, which is the aliphatic conjugated diene-based monomer, an aliphatic conjugated diene-based compound having 2 to 20 carbon atoms may be used. As a non-limiting example, the aliphatic conjugated diene-based first monomer may be at least one selected from the group consisting of 1,3-butadiene, 2-methyl-1,3-butadiene, 2,3-dimethyl-1,3-butadiene, 1,2-dimethyl-1,3-butadiene, 1,4-dimethyl-1,3-butadiene, 1-ethyl-1,3-butadiene, 2-phenyl-1,3-butadiene, 1,3-pentadiene, 1,4-pentadiene, 3-methyl-1,3-pentadiene, 4-methyl-1,3-pentadiene, 2,4-dimethyl-1,3-pentadiene, 3-ethyl-1,3-pentadiene, 1,3-hexadiene, 1,4-hexadiene, 1,5-hexadiene, 2-methyl-1,5-hexadiene, 1,6-heptadiene, 6-methyl-1,5-heptadiene, 1,6-octadiene, 1,7-octadiene, and 7-methyl-1,6-octadiene. For example, 1,3-butadiene may be used as the aliphatic conjugated diene-based first monomer.

The first repeating unit may be included in an amount of 35 to 60 wt% based on a total weight (100wt%) of the repeating units. In other words, the first monomer may be used in an amount of 35 to 55 wt% based on a total weight (100 wt%) of the monomer when preparing the (co)polymer.

For example, the first repeating unit may be included in an amount of 35 wt% or more, 37 wt% or more, 39 wt% or more, or 40 wt% or more, and 60 wt% or less, 58 wt% or less, 56 wt% or less, or 55 wt% or less based on a total weight (100 wt%) of the repeating units.

If the content of the first repeating unit is increased within the above range, the above-described effect with respect to the first repeating unit may be improved. However, if the content of the first repeating unit exceeds 60 wt%, there may be a problem in that the strength of the obtained binder is lowered.

### Second repeating unit

The second repeating unit is derived from an aromatic vinyl-based second monomer. Specifically, the second repeating unit corresponds to a structural unit of a (co)polymer formed by adding the above-described second monomer during polymerization.

If the second repeating unit is included in the (co)polymer, the binder for the anode according to the embodiment may have improved strength.

The aromatic vinyl-based second monomer may be at least one selected from the group consisting of styrene, α-methylstyrene, β-methylstyrene, p-t-butylstyrene, chlorostyrene, vinylbenzoic acid, methyl vinylbenzoate, vinylnaphthalene, chloromethylstyrene, hydroxymethylstyrene, and divinylbenzene, and for example, may be styrene.

The second repeating unit may be included in an amount of 0.1 to 25 wt% based on a total weight (100 wt%) of the repeating units. In other words, the second monomer may be used in an amount of 0.1 to 20 wt% based on a total weight (100 wt%) of the monomer when preparing the (co)polymer.

For example, the second repeating unit may be included in an amount of 0.1 wt% or more, 0.5 wt% or more, 1 wt% or more, or 2 wt% or more, and 25 wt% or less, 23 wt% or less, 21 wt% or less, or 20 wt% or less based on a total weight (100 wt%) of the repeating units.

If the content of the second repeating unit is increased within the above range, the above-described effect with respect to the second repeating unit may be improved. However, if the second repeating unit is included in the (co)polymer in an amount of more than 25 wt%, there may be a problem of reducing the fluidity of the binder or lowering the adhesive strength.

### Third repeating unit

The third repeating unit is derived from a nitrile-based third monomer. Specifically, the third repeating unit corresponds to a structural unit of a (co)polymer formed by adding the above-described third monomer during polymerization.

The nitrile-based third monomer may be at least one selected from the group consisting of acrylonitrile, methacrylonitrile, and allyl cyanide, and for example, may be acrylonitrile.

The third repeating unit may be included in an amount of 10 to 35 wt% based on a total weight (100 wt%) of the repeating units. In other words, the third monomer may be used in an amount of 15 to 35 wt% based on a total weight (100 wt%) of the monomer when preparing the (co)polymer.

For example, the third repeating unit may be included in an amount of 10 wt% or more, 11 wt% or more, 13 wt% or more, or 15 wt% or more, and 35 wt% or less, 30 wt% or less, 28 wt% or less, or 25 wt% or less based on a total weight (100 wt%) of the repeating units.

If the content of the third repeating unit is increased within the above range, the above-described effect with respect to the third repeating unit may be improved. However, if the third repeating unit is included in the (co)polymer in an amount of more than 35 wt%, there may be a problem of reducing the fluidity of the binder or lowering the adhesive strength.

### Fourth repeating unit

The fourth repeating unit is derived from an unsaturated carboxylic acid-based fourth monomer. Specifically, the fourth repeating unit corresponds to a structural unit of a (co)polymer formed by adding the above-described fourth monomer during polymerization.

If the fourth repeating unit is included in the (co)polymer, the binder for the anode according to the embodiment may have improved strength, and improved polymerization and storage stability.

The unsaturated carboxylic acid-based fourth monomer may be at least one selected from the group consisting of acrylic acid, methacrylic acid, maleic acid, fumaric acid, itaconic acid, tetrahydrophthalic acid, crotonic acid, isocrotonic acid, and nadic acid, and for example, may be acrylic acid.

The fourth repeating unit may be included in an amount of 15 to 35 wt% based on a total weight (100 wt%) of the repeating units. In other words, the fourth monomer may be used in an amount of 15 to 35 wt% based on a total weight (100 wt%) of the monomer when preparing the (co)polymer.

For example, the fourth repeating unit may be included in an amount of 15 wt% or more, 17 wt% or more, 19 wt% or more, or 20 wt% or more, and 35 wt% or less, 33 wt% or less, 31 wt% or less, or 30 wt% or less based on a total weight (100 wt%) of the repeating units.

If the content of the fourth repeating unit is increased within the above range, the above-described effect with respect to the fourth repeating unit may be improved. However, if the fourth repeating unit is included in the (co)polymer in an amount of more than 35 wt%, there may be a problem of reducing the fluidity of the binder or lowering the affinity with electrolyte.

### Average particle diameter of polymer (latex particles)

Meanwhile, in the binder for the anode according to the embodiment, the (co)polymer may be in the form of latex particles prepared through emulsion polymerization.

The (co)polymer may be a latex particle having an average particle diameter of 50 to 500 nm.

The latex particles may have an average particle diameter of 50 nm or more, 70 nm or more, or 100 nm or more, and 500 nm or less, 400 nm or less, 300 nm or less, or 200 nm or less. If the average particle diameter of the latex particles is too small, the viscosity may increase and the adhesive force of the mixture layer including the same to the current collector may be weakened. In contrast, if the average particle diameter of the latex particles is too large, the stability of the particles may be reduced.

The average particle diameter of the latex particles may be measured by using a particle size analyzer (NICOMP AW380, manufactured by PSS) using a dynamic light scattering method.

Specifically, in the present disclosure, the "average particle diameter" may mean an arithmetic average particle diameter in a particle diameter distribution measured by the dynamic light scattering method. Herein, the arithmetic average particle diameter may be measured through an average particle diameter of scattering intensity distribution, an average particle diameter of volume distribution, or an average particle diameter of number distribution, preferably through the average particle diameter of scattering intensity distribution.

For example, after diluting each binder for the anode so that the measured intensity value is about 300 (KHz) at room temperature, the average particle diameter of scattering intensity distribution may be measured by using a particle size analyzer (NICOMP AW380, manufactured by PSS) according to the dynamic light scattering method.

### Aqueous solvent

In addition, an aqueous solvent, that is, water, may be added to the binder for the anode according to the embodiment in addition to the above-described (co)polymer, that is, latex particles.

The aqueous solvent may be used in an amount of about 50 to about 1,000 parts by weight, specifically about 100 to about 400 parts by weight, based on 100 parts by weight of the (co)polymer, in terms of controlling the stability and viscosity of the latex particles. For example, a total solid content (TSC) may be adjusted to about 10 to about 65 wt% based on the total amount (100 wt%) of the binder for the anode according to the embodiment.

If the aqueous solvent is used too little, there may be a problem of lowering the stability of the latex particles. If the solvent is used too much, there may be a problem of lowering viscosity, weakening the adhesive force of the binder, and reducing the overall performance of the battery.

### Method for preparing binder for anode of secondary battery

In another embodiment of the present disclosure, provided is a method for preparing the binder for an anode according to the above-described embodiment by using emulsion polymerization.

Specifically, the emulsion polymerization may include a step of preparing a (co)polymer by emulsion-polymerizing a monomer mixture in the presence of an emulsifier and a polymerization initiator.

More specifically, the monomer mixture may include a) 35 to 60 wt% of a first repeating unit derived from an aliphatic conjugated diene-based first monomer, b) 0.1 to 25 wt% of a second repeating unit derived from an aromatic vinyl-based second monomer, c) 10 to 35 wt% of a third repeating unit derived from a nitrile-based third monomer, and d) 15 to 35 wt% of a fourth repeating unit derived from an unsaturated carboxylic acid-based fourth monomer based on a total weight (100 wt%) of the monomer mixture.

Hereinafter, the preparing method of the embodiment will be described in detail, but descriptions overlapping with the above-described content will be omitted.

### Emulsion polymerization

In addition, the emulsion polymerization may be performed by single polymerization or multi-stage polymerization. In this case, single polymerization may refer to a method in which the monomers used therein are put into a single reactor and polymerized at the same time, and multi-stage polymerization may refer to a method in which the monomers used therein are sequentially polymerized in two or more stages.

If being performed by the multi-stage polymerization, the emulsion polymerization may include the steps of:
primarily emulsion-polymerizing all of a) the aliphatic conjugated diene-based first monomer, all of b) the aromatic vinyl-based second monomer, all of c) the nitrile-based third monomer, and a part of d) the unsaturated carboxylic acid-based fourth monomer in the presence of the emulsifier and the polymerization initiator; and
adding the remainder of d) the unsaturated carboxylic acid-based fourth monomer, followed by performing secondary emulsion polymerization, after the primary emulsion polymerization.

The part of d) the unsaturated carboxylic acid-based fourth monomer in the primary emulsion polymerization, and the remainder of d) the unsaturated carboxylic acid-based fourth monomer in the secondary emulsion polymerization may satisfy a weight ratio of 1:0.1 to 1:10, specifically 1:1 to 1:8, and for example, 1:2.5 to 1:5.

In addition, the emulsion polymerization may be performed in a solution containing the above-described aqueous solvent in the presence of an emulsifier and a polymerization initiator.

A polymerization temperature and polymerization time of the emulsion polymerization for preparing the (co)polymer may be appropriately determined in some cases. For example, the polymerization temperature may be about 50 °C to about 200 °C, and the polymerization time may be about 0.5 hours to about 20 hours.

### Polymerization initiator

As the polymerization initiator usable during the emulsion polymerization, an inorganic or organic peroxide may be used. For example, a water-soluble initiator including potassium persulfate, sodium persulfate, ammonium persulfate, etc., and an oil-soluble initiator including cumene hydroperoxide, benzoyl peroxide, etc., may be used.

### Activator

In addition, an activator may be further included to promote the initiation of the reaction of the peroxide together with the polymerization initiator, and the activator used herein may be at least one selected from the group consisting of sodium formaldehyde sulfoxylate, sodium ethylenediaminetetraacetate, ferrous sulfate, and dextrose.

### Emulsifier

And, the emulsifier for the emulsion polymerization used herein may be an anionic emulsifier such as sodium dodecyl diphenyl ether disulfonate, sodium lauryl sulfate, sodium dodecyl benzene sulfonate, dioctyl sodium sulfosuccinate, etc., or nonionic emulsifiers such as polyethylene oxide alkyl ether like polyoxyethylene lauryl ether, polyethylene oxide alkyl aryl ether, polyethylene oxide alkyl amine, polyethylene oxide alkyl ester, etc. The above emulsifier may be a material having a hydrophilic group and a hydrophobic group at the same time, and during the emulsion polymerization process, a micelle structure may be formed and polymerization of each monomer may occur inside the micellar structure. Preferably, the anionic emulsifier and the nonionic emulsifier may be used alone or in combination of two or more types thereof, and using a mixture of the anionic emulsifier and the nonionic emulsifier may be more effective, but the present disclosure is not necessarily limited to such an emulsifier type.

And, the emulsifier may be used in an amount of about 0.01 to about 10 parts by weight, about 1 to about 10 parts by weight, or about 3 to about 5 parts by weight based on 100 parts by weight of the total monomer components used in the preparation of the copolymer.

### Anode mixture and anode

In other embodiments of the present disclosure, there is provided an anode mixture including the binder for an anode of the above-described embodiment and an anode active material, and there are also provided an anode mixture layer including the anode mixture, and an anode including an anode current collector.

Except for the binder for the anode according to the embodiment, the anode active material used in the anode mixture and the anode, the anode current collector, etc., may each include generally known components.

### Anode

The binder for the anode according to the embodiment may be included in an amount of 1 wt% to 10 wt%, specifically 1 wt% to 5 wt% based on a total weight (100 wt%) of the anode mixture. When the above is satisfied, the content of the anode active material may be relatively increased, and the discharge capacity of the anode may be further improved.

Meanwhile, the binder for the anode according to the embodiment has excellent properties such as binding force, mechanical properties, etc. Thus, if a graphite-based anode active material is used as the anode active material of the anode mixture, as well as an anode active material having a higher capacity than that of the graphite-based anode active material is used, it is possible to maintain binding force between the anode active material and the anode active material, between the anode active material and the anode current collector, etc. and suppressing the expansion of the anode active material due to mechanical properties per se.

Since the binder for the anode according to the embodiment is suitable to be applied not only with the graphite-based anode active material, but also with the anode active material having a higher capacity than that of the graphite-based anode active material, in one embodiment of the present disclosure, the type of the anode active material is not particularly limited.

Specifically, the anode active material may include carbon and graphite materials such as natural graphite, artificial graphite, carbon fiber, non-graphitizable carbon, etc.; metals capable of alloying with lithium such as Al, Si, Sn, Ag, Bi, Mg, Zn, In, Ge, Pb, Pd, Pt, Ti, etc., and compounds containing these elements; composites of metals and compounds thereof with carbon and graphite materials; lithium-containing nitride; titanium oxide; lithium titanium oxide, etc., but is not limited thereto. Among the above, a carbon-based active material, a silicon-based active material, a tin-based active material, or a silicon-carbon-based active material is more preferable, which may be used alone or in combination of two or more.

In general, the anode current collector may be made to have a thickness of 3 µm to 500 µm. Such anode current collector is not particularly limited, as long as it has conductivity without causing a chemical change to the battery, and for example, may be copper, stainless steel, aluminum, nickel, titan, baked carbon, copper or stainless steel surface-treated with carbon, nickel, titanium or silver, aluminum-cadmium alloy, etc. Further, a binding force of the anode active material may be increased by forming fine irregularities on the surface, and the anode current collector may be used in various forms such as film, sheet, foil, net, porous body, foam body, non-woven fabric body, etc.

The anode may be prepared by applying the anode mixture including the anode active material and the binder on the anode current collector, drying and rolling the same, and may be prepared by further adding a conductive material, a filler, and the like, if necessary.

Preferably, the anode may include at least one anode active material selected from the group consisting of a carbonaceous material and a silicon compound.

Here, the carbonaceous material may be at least one material selected from the group consisting of natural graphite, artificial graphite, Kish graphite, pyrolytic carbon, mesophase pitch, mesophase pitch-based carbon fiber, meso-carbon microbeads, petroleum- or coal-derived cokes, soft carbon, and hard carbon, which are exemplified above. And, the silicon compound may include a compound containing Si, that is, Si, Si-C composite, SiOx (0<x<2), the Si-Q alloy, a mixture thereof, or a mixture between at least one thereof and SiO₂.

The conductive material is used to impart conductivity to the anode, and any electrically conductive material without causing chemical change in the battery can be used. Examples thereof may include carbon-based materials such as natural graphite, artificial graphite, carbon black, acetylene black, ketjen black, carbon fiber, single-walled carbon nanotube, multi-walled carbon nanotube, etc.; metallic materials such as copper powder, nickel powder, aluminum powder, silver powder, metal fiber, etc.; conductive polymers such as polyphenylene derivatives; and a mixture thereof.

The filler may be optionally used as a component for suppressing the expansion of the anode, and is not particularly limited as long as it is a fibrous material without causing a chemical change to the battery. For example, the material used herein may include an olefin-based polymerization agent such as polyethylene, polypropylene, etc.; and a fibrous material such as glass fiber, carbon fiber, etc.

### Cathode

The cathode may include a cathode active material, and the cathode active material may include a layered compound such as lithium cobalt oxide (LiCoO₂), lithium nickel oxide (LiNiO₂), etc., or a compound substituted with one or more transition metals; lithium manganese oxide such as Li₁₊ₓMn₂₋ₓO₄ (in which x is 0 to 0.33), LiMnO₃, LiMn₂O₃, LiMnO₂, etc.; lithium copper oxide (Li₂CuO₂); vanadium oxide such as LiV₃O₈, LiFe₃O₄, V₂O₅, CU₂V₂O₇, etc.; Ni site type lithium nickel oxide represented by LiNi₁₋ₓMₓO₂ (in which M = Co, Mn, Al, Cu, Fe, Mg, B or Ga, and x = 0.01 to 0.3); lithium manganese composite oxide represented by LiMn₂₋ₓMₓO₂ (in which M = Co, Ni, Fe, Cr, Zn or Ta, and x = 0.01 to 0.1), or Li₂Mn₃MO₈ (in which M = Fe, Co, Ni, Cu or Zn); lithium manganese composite oxide having a spinel structure represented by LiNiₓMn₂₋ₓO₄; LiMn₂O₄ in which a part of Li in the formula is substituted with an alkaline earth metal ion; disulfide compound; Fe₂(MoO₄)₃, etc., but is not limited thereto.

In general, the cathode current collector may be made to have a thickness of 3 µm to 500 µm. Such anode current collector is not particularly limited, as long as it has high conductivity without causing a chemical change to the battery, and for example, may be stainless steel, aluminum, nickel, titan, baked carbon, aluminum or stainless steel surface-treated with carbon, nickel, titanium or silver, etc. The current collector may form fine irregularities on its surface to increase the adhesive force of the cathode active material, and may have various forms such as film, sheet, foil, net, porous body, foam body, non-woven fabric body, etc.

Such conductive material is not particularly limited, as long as it has conductivity without causing a chemical change to the battery, in which the followings may be used: for example, graphite such as natural graphite, artificial graphite, etc.; carbon black such as carbon black, acetylene black, ketjen black, channel black, furnace black, lamp black, thermal black, single-walled carbon nanotube, multi-walled carbon nanotube, etc.; conductive fiber such as carbon fabric, metal fabric, etc.; metal powder such as fluorocarbon, aluminum, nickel powder, etc.; conductive whiskey such as zinc oxide, potassium titanate, etc.; conductive metal oxide such as titanium oxide, etc.; a conductive material such as polyphenylene derivatives; etc.

A generally known binder may be used for the cathode. Representative examples thereof used herein may include polyvinyl alcohol, carboxymethyl cellulose, hydroxypropyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, etc., but is not limited thereto.

The anode and the cathode may be prepared by mixing an active material and a binder, in some cases, a conductive material, a filler, etc., in a solvent to prepare a slurry-like electrode mixture, and then applying the electrode mixture to each electrode current collector. Since such an electrode preparation method is widely known in the art, a detailed description thereof will be omitted herein.

### Secondary battery

In another embodiment of the present disclosure, a secondary battery including the anode according to the above-described embodiment is provided. Such a secondary battery may have a form including a cathode; an electrolyte; and an anode, and may be implemented as a lithium secondary battery.

The lithium secondary battery may be manufactured by impregnating an electrode assembly including a cathode, a separator, and an anode with a non-aqueous electrolyte.

The cathode and the anode may be the same as described above.

In the case of the separator, any one commonly used in lithium batteries may be used as it separates the anode and the cathode and provides a passage for lithium ions to move. In other words, the separator used herein may be one which has low resistance to ion movement of the electrolyte and has an excellent electrolyte-retaining ability. For example, the separator may be selected from glass fiber, polyester, Teflon, polyethylene, polypropylene, polytetrafluoroethylene (PTFE), or a combination thereof, and may be also in the form of nonwoven fabric or woven fabric. For example, a polyolefin-based polymer separator such as polyethylene, polypropylene, etc., may be mainly used for lithium ion batteries, and a coated separator containing a ceramic component or a polymer material may be used to secure heat resistance or mechanical strength, which may be optionally used in a single-layer or multi-layer structure.

In some cases, a gel polymer electrolyte may be coated on the separator to increase battery stability. Representative examples of such a gel polymer may include polyethylene oxide, polyvinylidene fluoride, polyacrylonitrile, etc.

However, if a solid electrolyte is used rather than the non-aqueous electrolyte, the solid electrolyte may serve as the separator, too.

The non-aqueous electrolyte may be a liquid electrolyte including a non-aqueous organic solvent and a lithium salt. The non-aqueous organic solvent may serve as a medium through which ions involved in the electrochemical reaction of the battery can move.

Examples of the solvent of the non-aqueous electrolyte may include propylene carbonate, ethylene carbonate, diethyl carbonate, dimethyl carbonate, ethylmethyl carbonate, dipropyl carbonate, dimethylsulfuroxide, acetonitrile, dimethoxyethane, dieoxyethane, vinylene carbonate, gamma-butyrolactone, ethylene sulfite, propylene sulfite, tetrahydrofuran, and a mixture thereof, specifically a mixture of a linear carbonate such as ethylmethyl carbonate, dimethyl carbonate, diethyl carbonate, etc., and a cyclic carbonate such as propylene carbonate, ethylene carbonate, etc., but the present disclosure is not limited thereto. The lithium salt is also not particularly limited as long as it is used in a conventional lithium secondary battery, for example, examples thereof may include lithium perchlorate (LiC10₄), lithium tetrafluoroborate (LiBF₄), lithium hexafluorophosphate (LiPF₆), lithium hexafluoroarsenate (LiAsF₆), lithium trifluoromethanesulfonate (LiCF₃S0₃), lithium bistrifluoromethanesulfonamide (UN(CF₃S0₂)₂), and a mixture thereof.

In addition, the electrolyte may further include vinylene carbonate (VC), vinyl ethylene carbonate (VEC), fluoroethylene ethylene carbonate (FEC), fluoropropylene carbonate (FPC), propensultone (PRS), propanesultone (PS), lithium bis(oxalato)borate (LiBOB), lithium difluorobis(oxalato)phosphate (LiDFOP), or a mixture thereof, but is not limited thereto, in order to improve film formation and high temperature preservation properties.

The lithium secondary battery according to the present disclosure can be used not only in a battery cell used as a power source for a small device, but also as a unit battery in a medium-large battery module including a plurality of battery cells.

Hereinafter, preferred Examples will be suggested for better understanding of the present disclosure. However, the following Examples are provided only for the purpose of illustrating the present disclosure, and thus the present disclosure is not limited thereto.

### <Example>

### Example 1

### (1) Preparation of binder for anode

A monomer mixture including (a) 1,3-butadiene (40 parts by weight), (b1) a-methylstyrene (5 parts by weight), (c) acrylonitrile (25 parts by weight), and (d1) methacrylic acid (5 parts by weight); sodium lauryl sulfate (1.5 parts by weight) as an emulsifier; and potassium persulfate (0.5 parts by weight) as a polymerization initiator were added to water (150 parts by weight) as a solvent.

The mixture was heated up to 60 °C, and subjected to a polymerization reaction for four hours while maintaining 60 °C, after which (d1) methacrylic acid (25 parts by weight) was further added and followed by the polymerization reaction for about five hours, thereby obtaining a binder including a (co)polymer in the form of latex particles and water.

The resulting binder of Example 1 had a total solid content of 30% and an average particle diameter of the latex particles measured by using a particle size analyzer (NICOMP AW380, manufactured by PSS) was 167 nm.

### (2) Preparation of anode mixture

Artificial graphite (85.38 parts by weight) and silicon oxide (11 parts by weight) as an anode active material, carbon black (1 part by weight) and single-wall carbon nanotube (0.02 parts by weight) as a conductive material, the binder of above Example 1 (1.6 parts by weight), and carboxymethyl cellulose (1 part by weight) as a thickener were used and mixed in water as a dispersion medium while stirring for one hour. In this case, a slurry phase was adjusted so that the total solid content might be 45 wt%, thereby obtaining an anode mixture of Example 1.

### (3) Preparation of anode

A copper foil having a thickness of 10 µm was prepared and used as an anode current collector. Using a comma coater, the anode mixture of above Example 1 was applied on both sides of the anode current collector at a loading amount of 7.0 mg/cm² per side of the anode current collector, dried with hot air for ten minutes in an oven at 80 °C, and roll-pressed so that the total thickness might be 93 µm. Accordingly, the anode of Example 1 was obtained.

### (4) Preparation of secondary battery

Lithium metal was used as a counter electrode. Specifically, a separator was inserted between the anode of Example 1 and the lithium metal, and subjected to assembly, after which an electrolyte was injected so as to complete a lithium ion half cell according to a method conventionally known in the art.

As the electrolyte, LiPF₆ was dissolved in a mixed solvent of ethylene carbonate (EC), propylene carbonate (PC) and diethyl carbonate (DEC) (weight ratio of EC:PC:DEC=3:2:5) to reach a concentration of 1 M, and vinylene carbonate (VC) was further added in an amount of 2 wt.

### Example 2

A binder for an anode, an anode mixture, an anode, and a secondary battery of Example 2 were prepared in the same manner as in Example 1, except for changing the composition of the monomer mixture.

Specifically, in Example 2, 1,3-butadiene (53 parts by weight), (b2) styrene (5 parts by weight), (c) acrylonitrile (19 parts by weight), and (d1) methacrylic acid (24 parts by weight in total with initial 5 parts by weight/later 19 parts by weight) were used.

### Example 3

A binder for an anode, an anode mixture, an anode, and a secondary battery of Example 3 were prepared in the same manner as in Example 1, except for changing the composition of the monomer mixture.

Specifically, in Example 3, (a) 1,3-butadiene (55 parts by weight), (b1) α-methylstyrene (5 parts by weight), (c) acrylonitrile (20 parts by weight), (d2) acrylic acid (initial 5 parts by weight) and (d1) methacrylic acid (later 17 parts by weight) were used.

### Example 4

A binder for an anode, an anode mixture, an anode, and a secondary battery of Example 4 were prepared in the same manner as in Example 1, except for changing the composition of the monomer mixture.

Specifically, in Example 4, (a) 1,3-butadiene (48 parts by weight), (b2) styrene (2 parts by weight), (c) acrylonitrile (25 parts by weight), and (d1) methacrylic acid (25 parts by weight in total with initial 10 parts by weight/later 15 parts by weight) were used.

### Example 5

A binder for an anode, an anode mixture, an anode, and a secondary battery of Example 5 were prepared in the same manner as in Example 1, except for changing the composition of the monomer mixture.

Specifically, in Example 5, (a) 1,3-butadiene (40 parts by weight), (b2) styrene (20 parts by weight), (c) acrylonitrile (15 parts by weight), and (d1) methacrylic acid (25 parts by weight in total with initial 5 parts by weight/later 20 parts by weight) were used.

### Comparative Example 1

A binder for an anode, an anode mixture, an anode, and a secondary battery of Comparative Example 1 were prepared in the same manner as in Example 1, except for changing the composition of the monomer mixture.

Specifically, in Comparative Example 1, (a) 1,3-butadiene (50 parts by weight), (c1) acrylonitrile (25 parts by weight), and (d1) methacrylic acid (25 parts by weight) were used.

### Comparative Example 2

A binder for an anode, an anode mixture, an anode, and a secondary battery of Comparative Example 2 were prepared in the same manner as in Example 1, except for changing the composition of the monomer mixture.

Specifically, in Comparative Example 2, (a) 1,3-butadiene (45 parts by weight), (b2) styrene (25 parts by weight), (c1) acrylonitrile (25 parts by weight), and (d1) methacrylic acid (5 parts by weight) were used.

### Comparative Example 3

A binder for an anode, an anode mixture, an anode, and a secondary battery of Comparative Example 3 were prepared in the same manner as in Example 1, except for changing the composition of the monomer mixture.

Specifically, in Comparative Example 3, (a) 1,3-butadiene (40 parts by weight), (b2) styrene (58 parts by weight), and (d2) acrylic acid (2 parts by weight) were used.

### Comparative Example 4

A binder for an anode, an anode mixture, an anode, and a secondary battery of Comparative Example 4 were prepared in the same manner as in Example 1, except for changing the composition of the monomer mixture.

Specifically, in Comparative Example 4, (a) 1,3-butadiene (40 parts by weight), (c) acrylonitrile (30 parts by weight), and (d1) methacrylic acid (30 parts by weight) were used.

### Comparative Example 5

A binder for an anode, an anode mixture, an anode, and a secondary battery of Comparative Example 5 were prepared in the same manner as in Example 1, except for changing the composition of the monomer mixture.

Specifically, in Comparative Example 5, (a) 1,3-butadiene (40 parts by weight), (b2) styrene (30 parts by weight), and (d1) methacrylic acid (30 parts by weight) were used.

### Comparative Example 6

A binder for an anode, an anode mixture, an anode, and a secondary battery of Comparative Example 6 were prepared in the same manner as in Example 1, except for changing the composition of the monomer mixture.

Specifically, in Comparative Example 6, (a) 1,3-butadiene (45 parts by weight), (b2) styrene (40 parts by weight), (c) acrylonitrile (5 parts by weight), and (d1) methacrylic acid (5 parts by weight) were used.

The composition of each binder for the anode of Examples 1 to 5 and Comparative Examples 1 to 6 is summarized in table 1 below.

In table 1 below, the first monomer represents (a) 1,3-butadiene, the second monomer represents (b1) α-methylstyrene or (b2) styrene, the third monomer represents (c) acrylonitrile, and the fourth monomer represents (d1) methacrylic acid or (d2) acrylic acid, respectively.

Further, the monomer content is based on the content (wt%) in the total weight (100 wt%) of the monomers.

**[Table 1]**

| | Monomer content (wt%) | | | |
|---|---|---|---|---|
| | First monomer | Second monomer | Third monomer | Fourth monomer |
| Example 1 | 40 | 5 | 25 | 30 |
| Example 2 | 53 | 5 | 19 | 24 |
| Example 3 | 55 | 5 | 20 | 20 |
| Example 4 | 48 | 2 | 25 | 25 |
| Example 5 | 40 | 20 | 15 | 25 |
| Comparative Example 1 | 50 | 0 | 25 | 25 |
| Comparative Example 2 | 45 | 20 | 25 | 10 |
| Comparative Example 3 | 40 | 58 | 0 | 2 |
| Comparative Example 4 | 34 | 30 | 0 | 30 |
| Comparative Example 5 | 40 | 0 | 30 | 30 |
| Comparative Example 6 | 45 | 40 | 5 | 5 |

### Experimental Example 1: Evaluation of binder for anode

Each binder for the anode of above Examples 1 to 5 and Comparative Examples 1 to 6 was evaluated under the following conditions and summarized in table 2 below.

Viscoelastic loss factor (tan δ) and storage modulus: After each binder for the anode was molded into a film-shaped specimen, a viscoelastic behavior was measured by using a dynamic mechanical analyzer (TA Instrument).

Specifically, a specimen was prepared by drying the binder for the anode to prepare a film having a thickness of 2 mm or less, and then punching the film in a rectangular shape with 18 mm (length) * 6 mm (width).

In other words, the binder for the anode was put into a Teflon mold, dried at room temperature for 24 hours, and then dried again with hot air at 80 °C for 24 hours to prepare a film having a thickness of 2 mm or less. After that, a specimen was prepared by punching in a rectangular shape of the above size.

The specimen was added into a dynamic mechanical analyzer (manufactured by TA Instrument), and the temperature rose at a frequency of 1 Hz and 5 °C/min in a film tension mode, thereby measuring a viscoelastic behavior against dynamic deformation with a shear strain having a strain amplitude of 0.1 % at each measurement temperature (-60 °C to 100 °C).

In the measurement process, a temperature (peak value) was confirmed upon reaching the maximum value of the viscoelastic loss factor (tan δ) and recorded as tan δ (Tp) in table 2 below, and the storage modulus at 100 °C was measured and shown in table 2 below.

In addition, the storage modulus value at the glass transition temperature (Tp) was divided by the storage modulus value at 100 °C, so as to obtain a ratio of the storage modulus measured at 100 °C to the storage modulus at the glass transition temperature (i.e., Tp) of the (co)polymer.

For reference, the dynamic mechanical analyzer may be used to confirm the behavior of the glass transition temperature, which is difficult to be confirmed in DSC due to the properties of the specimen. From the result, it was found that the higher the tan δ peak value, the higher the Tg and harder with the higher strength; and the lower the tan δ peak value, the lower the Tg and softer.

Average particle diameter of latex particles: After diluting each binder for the anode at room temperature so that the measured intensity value is about 300 (KHz), an average particle diameter was measured by using a particle size analyzer (NICOMP AW380, manufactured by PSS) according to the dynamic light scattering method.

Specifically, distilled water was added to the binder for the anode to dilute, and then put into a particle size analyzer (NICOMP AW380, manufactured by PSS), so as to record the average particle diameter measured after five minutes.

Here, the average particle diameter means an arithmetic average particle diameter in a particle diameter distribution measured by the dynamic light scattering method, in which the arithmetic average particle diameter corresponds to the average particle diameter of scattering intensity distribution.

**[Table 2]**

| | tanδ(Tp) (°C) | (1) Storage modulus at Tp (Mpa) | (2) Storage modulus at 100 °C (Mpa) | Storage modulus ratio = (2)/(1) | Particle diameter (µm) |
|---|---|---|---|---|---|
| Example 1 | -9 | 1700 | 287 | 0.169 | 167 |
| Example 2 | -21 | 813 | 251 | 0.309 | 135 |
| Example 3 | -18 | 564 | 108 | 0.191 | 152 |
| Example 4 | -18 | 1900 | 290 | 0.153 | 173 |
| Example 5 | -12 | 780 | 112 | 0.144 | 162 |
| Comparative Example 1 | 19 | 41 | 4 | 0.098 | 101 |
| Comparative Example 2 | 15 | 40 | 2 | 0.050 | 115 |
| Comparative Example 3 | 0 | 30 | 1 | 0.033 | 125 |
| Comparative Example 4 | 41 | 350 | 25 | 0.071 | 109 |
| Comparative Example 5 | 38 | 400 | 22 | 0.055 | 104 |
| Comparative Example 6 | 5 | 45 | 1 | 0.022 | 167 |

Referring to table 2, it can be seen that the storage modulus of Examples 1 to 5 is excellent compared to Comparative Examples 1 to 6.

Specifically, with regard to Comparative Examples 1 to 6, it was confirmed that any one of the first to fourth monomers is not used, or the amount of the first to fourth monomers used does not satisfy the limited range in the embodiment, so that the storage modulus measured at 100 °C is low with less than 100 MPa and the viscoelasticity is also inferior.

In addition, with regard to Comparative Examples 1 to 6, it was confirmed that a ratio of the storage modulus measured at 100 °C to the storage modulus at the glass transition temperature of each (co)polymer is 0.1 or less (i.e., 10% or less).

In contrast, with regard to Examples 1 to 5, it was confirmed that the storage modulus measured at 100 °C is 100 MPa or more and the maximum peak temperature (Tp) of the viscoelastic loss factor (tanδ) is 0 °C or less, as the first to fourth monomers are included and the amount thereof satisfies the limited range in the embodiment.

In addition, with regard to Examples 1 to 5, it was confirmed that a ratio of the storage modulus measured at 100 °C to the storage modulus at the glass transition temperature of each (co)polymer is 0.1 or less (i.e., 10% or more).

### Experimental Example 2: Evaluation of anode and secondary battery

With regard to Examples 1 to 5 and Comparative Examples 1 to 6, the anode and the lithium secondary battery were evaluated under the following conditions, respectively, and the results are recorded in table 3 below.

Capacity retention after 30 cycles of secondary battery: In a constant temperature chamber at 25 °C, a process of charging each of the prepared coin-type lithium secondary batteries at 0.1 C and discharging at 0.1 C in a voltage range of 0 to 1 V was repeated 30 times, and the capacity retention (capacity retention after 30 cycles) is summarized in table 3 below.

Adhesion of anode: With regard to each anode of above Examples and Comparative Examples, peel strength was measured five times or more, and an average value thereof is shown in table 2 below. In this case, the peel strength was measured by using a tension measuring instrument (Stable Micro System, TA-XT) as force (gf) required for removing a tape from the anode at a peeling angle of 180° after attaching the anode to an adhesive tape having a width of 20 mm.

**[Table 3]**

| | Adhesion of anode (gf/cm) | Capacity retention after 30 cycles of secondary battery (%) |
|---|---|---|
| Example 1 | 25 | 96 |
| Example 2 | 21 | 96 |
| Example 3 | 18 | 95 |
| Example 4 | 22 | 96 |
| Example 5 | 19 | 94 |
| Comparative Example 1 | 12 | 90 |
| Comparative Example 2 | 13 | 88 |
| Comparative Example 3 | 6 | 85 |
| Comparative Example 4 | 5 | 86 |
| Comparative Example 5 | 12 | 89 |
| Comparative Example 6 | 23 | 84 |

From these results, in the case of one embodiment of the present disclosure, it was found that the storage modulus is not significantly decreased even when a temperature rises, so the elasticity is enough to withstand a change in the volume of the anode active material, thereby providing optimal elasticity in an actually used temperature range. In addition, in the case of the embodiment, it was found that processability is improved and the thickness expansion of the electrode can be suppressed, thereby securing an excellent lifespan of the secondary battery.

In addition to the description of the embodiment, the content of each monomer and the content ratio of the monomers are controlled with reference to above Examples 1 to 5, thereby adjusting the elasticity of the binder for the anode compared to Comparative Examples 1 to 6, and ultimately adjusting the lifespan of the secondary battery to a desired range.

## Claims

1. A binder for an anode of a secondary battery, comprising a (co)polymer having a storage modulus of 100 MPa or more measured at 100 °C.

2. The binder for the anode of the secondary battery of claim 1, wherein the storage modulus is measured by applying a shear strain with a frequency of 1 Hz and a strain amplitude of 0.1% to a film having a thickness of 2 mm or less including the (co)polymer within a temperature range of -60 to 100 °C and raising the temperature at a heating rate of 5 °C/min.

3. The binder for the anode of the secondary battery of claim 1, wherein a ratio of the storage modulus measured at 100 °C to the storage modulus at a glass transition temperature of the (co)polymer is 10% more.

4. The binder for the anode of the secondary battery of claim 1, wherein the binder for the anode has a maximum peak temperature (Tp) of viscoelastic loss factor (tanδ) of 0 °C or lower, when a viscoelastic behavior is measured against dynamic deformation of a film while applying a shear strain with a frequency of 1 Hz and a strain amplitude of 0.1% within a temperature range of -60 to 100 °C and raising the temperature at a heating rate of 5 °C/min.

5. The binder for the anode of the secondary battery of claim 1, wherein the binder for the anode comprises a (co)polymer, and the (co)polymer comprises:
a) 35 to 60 wt% of a first repeating unit derived from an aliphatic conjugated diene-based first monomer;
b) 0.1 to 25 wt% of a second repeating unit derived from an aromatic vinyl-based second monomer;
c) 10 to 35 wt% of a third repeating unit derived from a nitrile-based third monomer; and
d) 15 to 35 wt% of a fourth repeating unit derived from an unsaturated carboxylic acid-based fourth monomer based on a total weight (100 wt%) of the repeating units.

6. The binder for the anode of the secondary battery of claim 5, wherein the first monomer is at least one selected from the group consisting of 1,3-butadiene, 2-methyl-1,3-butadiene, 2,3-dimethyl-1,3-butadiene, 1,2-dimethyl-1,3-butadiene, 1,4-dimethyl-1,3-butadiene, 1-ethyl-1,3-butadiene, 2-phenyl-1,3-butadiene, 1,3-pentadiene, 1,4-pentadiene, 3-methyl-1,3-pentadiene, 4-methyl-1,3-pentadiene, 2,4-dimethyl-1,3-pentadiene, 3-ethyl-1,3-pentadiene, 1,3-hexadiene, 1,4-hexadiene, 1,5-hexadiene, 2-methyl-1,5-hexadiene, 1,6-heptadiene, 6-methyl-1,5-heptadiene, 1,6-octadiene, 1,7-octadiene, and 7-methyl-1,6-octadiene.

7. The binder for the anode of the secondary battery of claim 5, wherein the second monomer is at least one selected from the group consisting of styrene, α-methylstyrene, β-methylstyrene, p-t-butylstyrene, chlorostyrene, vinylbenzoic acid, methyl vinylbenzoate, vinylnaphthalene, chloromethylstyrene, hydroxymethylstyrene, and divinylbenzene.

8. The binder for the anode of the secondary battery of claim 5, wherein the third monomer is at least one selected from the group consisting of acrylonitrile, methacrylonitrile, and allyl cyanide.

9. The binder for the anode of the secondary battery of claim 5, wherein the fourth monomer is at least one selected from the group consisting of acrylic acid, methacrylic acid, maleic acid, fumaric acid, itaconic acid, tetrahydrophthalic acid, crotonic acid, isocrotonic acid, and nadic acid.

10. The binder for the anode of the secondary battery of claim 1, wherein the (co)polymer is a latex particle having an average particle diameter of 50 to 500 nm.

11. The binder for the anode of the secondary battery of claim 1, further comprising an aqueous solvent.

12. The binder for the anode of the secondary battery of claim 11, wherein the aqueous solvent is included in an amount of 50 to 1,000 parts by weight based on 100 parts by weight of the (co)polymer.

13. A method for preparing the binder for the anode of the secondary battery of claim 1, comprising the step of:
preparing the (co)polymer by emulsion-polymerizing a monomer mixture in the presence of an emulsifier and a polymerization initiator.

14. The method for preparing the binder for the anode of the secondary battery of claim 13,
wherein the monomer mixture comprises a) 35 to 55 wt% of an aliphatic conjugated diene-based first monomer; b) 0.1 to 20 wt% of an aromatic vinyl-based second monomer; c) 15 to 35 wt% of a nitrile-based third monomer; and d) 15 to 35 wt% of an unsaturated carboxylic acid-based fourth monomer based on a total weight (100 wt%) of the monomer mixture.

15. The method for preparing the binder for the anode of the secondary battery of claim 13,
wherein the step of preparing the (co)polymer by emulsion-polymerizing the monomer mixture in the presence of the emulsifier and the polymerization initiator is performed by multi-stage polymerization.

16. The method for preparing the binder for the anode of the secondary battery of claim 15,
wherein the step of preparing the (co)polymer by emulsion-polymerizing the monomer mixture in the presence of the emulsifier and the polymerization initiator comprises the steps of:
primarily emulsion-polymerizing all of a) the aliphatic conjugated diene-based first monomer, all of b) the aromatic vinyl-based second monomer, all of c) the nitrile-based third monomer, and a part of d) the unsaturated carboxylic acid-based fourth monomer in the presence of the emulsifier and the polymerization initiator; and
adding the remainder of d) the unsaturated carboxylic acid-based fourth monomer, followed by performing secondary emulsion polymerization, after the primary emulsion polymerization.

17. The method for preparing the binder for the anode of the secondary battery of claim 16,
wherein the part of d) the unsaturated carboxylic acid-based fourth monomer in the primary emulsion polymerization and the remainder of d) the unsaturated carboxylic acid-based fourth monomer in the secondary emulsion polymerization satisfy a weight ratio of 1:0.1 to 1:10.

18. An anode mixture of a secondary battery, comprising the binder for the anode of the secondary battery of claim 1 and an anode active material.

19. The anode mixture of the secondary battery of claim 18,
wherein the anode comprises at least one anode active material selected from the group consisting of a carbonaceous material and a silicon compound.

20. An anode of a secondary battery, comprising an anode mixture layer comprising the anode mixture of claim 18; and an anode current collector.

21. A secondary battery, comprising the anode of claim 20.
